Europäisches Patentamt

European Patent Office

Office européen des brevets

(19)

(11) Publication number: 0 113 169

A2

# (12) EUROPEAN PATENT APPLICATION

(21) Application number: 83306565.9

(22) Date of filing: 28.10.83

(51) Int. Cl.³: **A 01 N 43/60**
A 01 N 43/78
//(A01N43/60, 43/12),
(A01N43/78, 43/60)

(30) Priority: 23.11.82 GB 8233364
23.11.82 GB 8233365

(43) Date of publication of application:
11.07.84 Bulletin 84/28

(84) Designated Contracting States:
AT BE CH DE FR GB IT LI LU NL SE

(71) Applicant: FBC LIMITED
Hauxton
Cambridge CB2 5HU(GB)

(72) Inventor: Mayes, Anthony Joseph
61 High Street
Little Shelford Cambridge(GB)

(72) Inventor: Rea, Bryan Leslie
61 Dovecote Lane
Beeston Nottingham(GB)

(74) Representative: Wells, Norman David et al,
FBC LIMITED Industrial Property Department
Chesterford Park Research Station
Saffron Walden Essex CB10 1XL(GB)

(54) Herbicidal mixtures and methods.

(57) Synergistic herbicidal methods and compositions utilising a combination of:
(a) 2-(4-(6-chloro-2-quinoxalinyloxy)phenoxy) propionic acid, or a salt or ester thereof, and
(b) benazolin (i.e. 4-chloro-2-oxobenzothiazolin-3-ylacetic acid or a salt or ester thereof) and/or ethofumesate (i.e. 2-ethoxy-2,3-dihydro-3,3-dimethylbenzofuran-5-yl methanesulphonate).

EP 0 113 169 A2

82/33364

# HERBICIDAL MIXTURES AND METHODS

This invention concerns herbicidal compositions and methods.

Many compounds are known to be herbicidally active. We have now discovered that certain novel combinations of known herbicides are surprisingly advantageous.

Accordingly, in one aspect, this invention provides a herbicidal composition which comprises from 0.05 to 99% by weight in total of:

(a) 2-(4-(6-chloro-2-quinoxalinyloxy)phenoxy)propionic acid, or a salt or ester thereof, and

(b) benazolin (i.e. 4-chloro-2-oxobenzothiazolin-3-ylacetic acid or a salt or ester thereof) and/or ethofumesate (i.e. 2-ethoxy-2,3-dihydro-3,3-dimethylbenzofuran-5-yl methanesulphonate),

in association with a suitable carrier and/or surface active agent.

In another aspect, the invention provides a method of combatting weeds, which comprises applying to a locus infested or liable to be infested therewith, an effective amount of the two components (a) and (b).

Each of the components (a) and (b) is known separately as a herbicide. When used in combination, however, the combination is synergistic.

When component (a), or benazolin as component (b), is employed in the form of a salt, it is preferably an alkali-metal or alkaline earth metal salt, e.g. a sodium, potassium or calcium salt. When it is employed in the form of an ester, it is preferably an alkyl ester e.g. where the alkyl group is of 1 to 4 carbon atoms,

- 1 -

for example a methyl, ethyl, n-propyl, isopropyl or n-butyl ester. The ethyl esters of both are particularly preferred.

Where component (b) is benazolin, the weight ratio of (a): (b) is preferably 0.05-3:1, desirably 0.1-1:1.

Where component (b) is ethofumesate, the weight ratio of (a):(b) is preferably 0.02-2:1, desirably 0.03-1:1.

Component (b) may comprise a combination of the specified active compounds, in which case they are preferably present in a weight ratio of benazolin to ethofumesate of 0.1-2:1. Preferably, however, component (b) comprises benazolin or ethofumesate alone.

The components (a) and (b) may be applied sequentially to the locus if desired, e.g. with one component being applied a few minutes, hours or up to 2 days before the second. They are preferably applied, however, as a composition comprising both.

Such compositions will normally be produced initially containing from 0.5 to 99%, preferably from 0.5 to 85%, and more usually from 10 to 50% by weight of the present compounds, which are diluted if necessary before application to the locus to be treated such that the total concentration of active ingredient in the formulation applied is from 0.05 to 5% by weight.

The carrier may be water, in which case an organic solvent may also be present, though this is not usually employed. A flowable suspension concentrate may be formed by grinding the compound with water, a wetting agent and a suspending agent, e.g. xanthan gum.

The carrier may alternatively be a water immiscible organic solvent, e.g. a hydrocarbon which boils within the range 130-270°C, e.g. xylene, in which the compound is dissolved or suspended. An emulsifiable concentrate containing a water immiscible solvent may be formed with a surface active agent so that the concentrate acts as a self-emulsifiable oil on admixture with water.

The carrier may alternatively be a water-miscible organic solvent e.g. 2-methoxyethanol, methanol, propylene glycol, diethylene glycol, diethylene glycol monoethyl ether, formamide or methylformamide.

The carrier may alternatively be a solid, which may be finely divided or granular. Examples of suitable solids are limestone, clays, sand, mica, chalk, attapulgite, diatomite, perlite, sepiolite, silicas, silicates, lignosulphonates and solid fertilizers. The carrier can be of natural or synthetic origin or can be modified natural material.

Wettable powders soluble or dispersible in water may be formed by admixing the compound in particulate form with a particulate carrier or spraying molten compound on to the particulate carrier, admixing a wetting agent and a dispersing agent and finely grinding the whole powder mixture.

An aerosol composition may be formed by admixing the compound with a propellant, e.g. a polyhalogenated alkane such as dichlorofluoromethane, and suitably also with a solvent.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with a fatty alcohol ethoxylate, or salts of such esters, fatty alcohol sulphates such as sodium dodecyl sulphate, ethoxylated fatty alcohol sulphates, ethoxylated alkylphenol sulphates, lignin sulphates, petroleum sulphonates, alkylaryl sulphonates such as alkyl-benzene sulphonates or lower alkylnapthalene sulphonates, salts of sulphonated napthaleneformaldehyde condensates, salts of sulphonated phenolformaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated napthaleneformaldehyde condensates, salts of sulphonated phenolformaldehyde condensates, sodium oleoyl N-methyltauride, dialkyl sulphosuccinates, alkyl phenol ethoxylates, and fatty alkyl ethoxylates.

If the components (a) and (b) are applied sequentially they may each be applied in a composition analogous to those described above.

If desired, the compositions may contain one or more further pesticides, e.g. herbicides, fungicides or insecticides in addition to components (a) and (b).

When component (b) is benazolin, a particularly preferred compound for use therewith is 3,6-dichloropicolinic acid or a salt, e.g. the ethanolamine salt, or a ester thereof.

When component (b) is ethofumesate, a particularly preferred compound for use therewith is phenmedipham, i.e. methyl 3-m-tolyl-carbamoyloxyphenylcarbamate.

The present method and compositions are highly effective for the selective control of weeds in crops.

Amongst the weeds which are combatted are grass weeds, e.g. couch grass (<u>Elymus repens</u>), blackgrass (<u>Alopecurus myosuroides</u>), ryegrass (<u>Lolium perenne</u>), annual meadowgrass (<u>Poa annua</u>), barren brome (<u>Bromus sterilis</u>), and wild oats (<u>Avena fatua</u>), and a wide range of broad-leaved weeds including speedwells (<u>Veronica spp</u>), chickweed (<u>Stellaria media</u>), cleavers (<u>Galium aparine</u>), and mayweeds (<u>Matricaria spp.</u>).

Where component (b) is or includes benazolin, the crops in which the present method and compositions may be employed include oil seed rape, soybeans and peanuts.

Where component (b) is or includes ethofumesate, the crops in which the present method and compositions may be employed include potatoes and beet crops, e.g. sugar beet, red beet, fodder beet, spinach beet and mangels.

In the present method the amount of (a) applied is preferably 0.05 to 2 kg/ha. Where component (b) is benazolin the amount thereof applied is preferably 0.1 to 2 kg/ha, and where it is ethofumesate the amount thereof applied is preferably 0.5 to 4 kg/ha. The compositions of the invention desirably contain the components (a) and (b) in a suitable ratio to enable their application at such rates.

The compositions of the invention are preferably applied post-emergence of the crop.

The following Examples are provided by way of illustration only.

Example 1

Seeds of the plant species listed below were sown in 750 mm diameter plastic pots containing sterilised sandy loam. The pots were then watered and placed in a glasshouse until the plants had 2 to 3 true leaves. The plants then received a foliar spray of the compounds set out below, formulated as a solution in 1:1 by volume of acetone and the wetting agent polyoxyethylene (20 mols) monolaurate solution (2g per litre).

The concentration of the test compounds and volume of application were calculated to give the desired rate of application of the compound in 200 litres per hectare. After the periods indicated, the plants were visually assessed for percentage herbicidal response relative to an untreated control.

In the tables, the following designations are employed:

Compound A - Ethyl 2-(4-(6-chloro-2-quinoxalinyloxy)phenoxy)propionate

Compound B - Ethyl 4-chloro-2-oxobenzothiazolin-3-ylacetate

Compound C - 2-Ethoxy-2,3-dihydro-3,3-dimethylbenzofuran-5-yl methanesulphonate

| Table 1 | | % Control | | |
|---------|-----------|-----------|----------|-------|
| Treatment | Rate (kg/ha) | Blackgrass | Ryegrass | Wheat |
| Compound A | 0.25 | 20 | 20 | 5 |
| Compound C | 0.25 | 5 | 5 | 10 |

Table 1 - Contd.

| Treatment | Rate (kg/ha) | Blackgrass | Ryegrass | Wheat |
|---|---|---|---|---|
| Compound A | 0.05 | | | |
| + Compound C | +0.2 | 55 | 25 | 55 |
| Compound A | 0.15 | | | |
| + Compound C | +0.1 | 60 | 30 | 35 |

Table 2

| Treatment | Rate (kg/ha) | % Control Timothy |
|---|---|---|
| Compound A | 0.1 | 10 |
| Compound B | 0.2 | 0 |
| Compound A | 0.1 | |
| + Compound B | +0.2 | 40 |
| Compound A | 0.05 | 15 |
| Compound B | 0.7 | 5 |
| Compound A | 0.05 | |
| + Compound B | +0.7 | 55 |

## CLAIMS

1. A herbicidal composition which comprises from 0.05 to 99% by weight in total of:

   (a) 2-(4-(6-chloro-2-quinoxalinyloxy)phenoxy)propionic acid, or a salt or ester thereof, and

   (b) benazolin (i.e. 4-chloro-2-oxobenzothiazolin-3-ylacetic acid, or a salt or ester thereof) and/or ethofumesate (i.e. 2-ethoxy-2,3-dihydro-3,3-dimethylbenzofuran-5-yl methanesulphonate),

   in association with a suitable carrier and/or surface active agent.

2. A herbicidal composition according to claim 1 which comprises from 10 to 50% by weight in total of (a) and (b).

3. A herbicidal composition according to claim 1 or claim 2 wherein component (b) is benazolin and the weight ratio of (a):(b) is 0.05-3:1.

4. A herbicidal composition according to any of claims 1 to 3 wherein component (a), and/or benazolin as component (b), is employed as the ethyl ester.

5. A herbicidal composition according to any of claims 1 to 3 wherein component (b) is ethofumesate and the weight ratio of (a):(b) is 0.02-2:1.

6. A method of combatting weeds at a locus infested or liable to be infested therewith, which comprises applying to said locus an effective amount of:

   (a) 2-(4-(6-chloro-2-quinoxalinyloxy)phenoxy)propionic acid, or a salt or ester thereof, and

(b)  benazolin (i.e. 4-chloro-2-oxobenzothiazolin-3-ylacetic acid, or a salt of ester thereof) and/or ethofumesate (i.e. 2-ethoxy-2,3-dihydro-3,3-dimethylbenzofuran-5-yl methanesulphonate).

7.  A method according to claim 6 wherein (a) and (b) are applied in the form of a composition according to any of claims 1 to 5.

8.  A method according to claim 6 or claim 7 wherein the amount of (a) applied is from 0.05 to 2 kg/ha.

9.  A method according to any of claims 6 to 8 wherein (b) is benazolin, and the amount thereof applied is from 0.1 to 2 kg/ha.

10.  A method according to any of claims 6 to 8 wherein (b) is ethofumesate, and the amount thereof applied is from 0.5 to 4 kg/ha.